Europäisches Patentamt

European Patent Office

Office européen des brevets

(19)

(11) Veröffentlichungsnummer: **0 017 741**
**B1**

(12) **EUROPÄISCHE PATENTSCHRIFT**

(45) Veröffentlichungstag der Patentschrift:
02.06.82

(21) Anmeldenummer: 80101057.0

(22) Anmeldetag: 03.03.80

(51) Int Cl³: **C 01 B 25/46**

(54) Verfahren zur Überführung von Extraktionsrückständen aus der Phosphorsäurereinigung in feste Deponieprodukte.

(30) Priorität: 12.03.79 DE 2909572

(43) Veröffentlichungstag der Anmeldung:
29.10.80 Patentblatt 80/22

(45) Bekanntmachung des Hinweises auf die Patenterteilung:
02.06.82 Patentblatt 82/22

(84) Benannte Vertragsstaaten:
AT BE CH DE FR GB IT NL SE

(56) Entgegenhaltungen:
DE-A-2 414 182
DE-A-2 630 363
DE-A-2 657 189
DE-A-2 657 190
US-A-3 375 066

(73) Patentinhaber: HOECHST AKTIENGESELLSCHAFT,
Postfach 80 03 20, D-6230 Frankfurt/Main 80 (DE)

(72) Erfinder: Schrödter, Klaus, Dr., Röntgenstrasse 23,
D-5000 Köln 30 (DE)
Erfinder: Gradl, Reinhard, Dr., Am Grünen Weg 6,
D-5030 Hürth-Knapsack (DE)
Erfinder: Ehlers, Klaus-Peter, Dr., Am Steinfeld 5,
D-5042 Erftstadt (DE)
Erfinder: Scheibitz, Wolfgang, Dr., Völklinger Weg 64,
D-6000 Frankfurt/Main 71 (DE)

Verfahren zur Überführung von Extraktionsrückständen aus der Phosphorsäurereinigung in feste Deponieprodukte

Die vorliegende Erfindung betrifft ein Verfahren zur Überführung von Raffinate genannten, sauren Salzrückständen, die bei der Reinigung von Phosphorsäure durch Lösungsmittelextraktion anfallen, in ein festes Deponieprodukt, indem man die wasserhaltigen Raffinate mit festem Kalkhydrat oder gebranntem Kalk umsetzt.

Bei der Reinigung von Naßphosphorsäure durch Extraktion wird die Rohsäure mit organischen Lösungsmitteln, wie Alkoholen, Estern, Ketonen oder Ethern zumeist in Gegenwart von Schwefelsäure im Gegenstrom extrahiert. Dabei tritt die freie Phosphorsäure in die organische Lösungsmittelphase über, während die anorganischen Verunreinigungen der Rohsäure — im wesentlichen Eisen, Aluminium, Magnesium und Calcium, daneben aber auch in geringerer Konzentration viele Schwermetalle, wie Kupfer, Cadmium, Nickel, Zink und Chrom — hauptsächlich als Sulfate und Phosphate in Form einer wässerigen Lösung bzw. Suspension zurückbleiben und abgetrennt werden. Die Entsorgung dieser sauren Rückstände bereitet wegen ihres Gehaltes an wasserlöslichen Schadstoffen (beispielsweise Zn, Cd, Cu, $P_2O_5$) erhebliche Schwierigkeiten. Ein Ablassen dieser sauren Salzlösungen in die Betriebsabwässer ist ohne zusätzliche Reinigung nicht möglich.

Sowohl in der DE-A-2 657 189 als auch in der DE-A-2 657 190 wurde bereits vorgeschlagen, diese sauren Rückstände mit gebranntem Kalk (CaO) in ein festes, neutral reagierendes Deponieprodukt zu überführen.

Für eine Anwendung dieser Verfahren ist es allerdings erforderlich, daß der Wassergehalt des Raffinates nur so hoch ist, daß nach Verdampfung eines Teiles des Wassers durch die bei der Umsetzung mit gebranntem Kalk frei werdende Reaktionswärme ein festes Produkt erhalten wird. Die technische Durchführung dieser Verfahren, beispielsweise in einem Kneter, ist wegen starker Verkrustungen und mechanischem Verschleiß des Reaktors aufwendig und störanfällig.

Ein weiterer Nachteil der bekannten Verfahren liegt darin, daß ein neutral reagierendes Deponieprodukt hergestellt wird. Beim Neutralpunkt sind jedoch einige der Schadstoffe, insbesondere Zink- und Kupfersalze sowie Orthophosphate, soweit wasserlöslich, daß die abfließenden Sickerwässer der Deponie unzulässig hohe Konzentrationen dieser Verunreinigungen aufweisen.

Aufgabe der vorliegenden Erfindung war es, ein technisch einfaches Verfahren zu finden, nach dem die bei der Extraktionsreinigung von Naßphosphorsäuren anfallenden schwefel- und phosphorsauren Salzlösungen unabhängig von ihrem Wassergehalt in einen Feststoff überführt werden können, dessen Bestandteile eine so geringe Wasserlöslichkeit besitzen, daß bei einer Eluierung auf der Deponie keine umweltschädigenden Konzentrationen der Schadstoffe in den Abwässern auftreten.

Überraschenderweise wurde nun gefunden, daß sich diese Aufgabe lösen läßt, wenn man zunächst in den Raffinaten einen solchen Wassergehalt einstellt, daß nach der Umsetzung mit dem Kalkhydrat oder gebranntem Kalk eine filtrierfähige, wäßrige Suspension erhalten wird.

Anschließend wird den Raffinaten so viel des festen Kalkhydrates oder gebrannten Kalkes zugesetzt, daß der nach der Umsetzung und Filtration der dabei gebildeten Reaktionsmaische anfallende Filterkuchen in wäßriger 10gew.-%iger Aufschlämmung einen pH-Wert von 9 bis 14, vorzugsweise von 9 bis 10, aufweist.

Bevor jedoch die Umsetzung der Reaktionsmaische beendet ist und ihr pH-Wert einen Wert von 5 bis 8, vorzugsweise von 6 bis 7, erreicht hat, filtriert man die Maische und läßt den abgetrennten Filterkuchen ausreagieren und führt ihn der Deponie zu.

Zur Einstellung des Wassergehaltes der Raffinate empfiehlt es sich, daß bei der Filtration der Reaktionsmaische anfallende Filtrat ganz oder teilweise zu rezirkulieren. Vorzugsweise wählt man dabei den Wassergehalt so, daß sich in den Raffinaten nach der Umsetzung Feststoffgehalte von 20 bis 40 Gew.-% ergeben.

Die Zusammensetzung der Raffinate ist je nach Herkunft der Phosphorsäure und nach Art des Reinigungsverfahrens verschieden. Daher muß die Menge an Kalkhydrat oder gebranntem Kalk, welche den Raffinaten zugesetzt werden muß, um einen Filterkuchen der Reaktionsmaische zu erhalten, dessen wäßrige Aufschlämmung einen pH-Wert von 9 bis 14 aufweist, jeweils durch Vorversuche ermittelt werden.

Dieser pH-Wert wird in einer Aufschlämmung in Wasser bestimmt, die einen Feststoffgehalt von 10 Gew.-% besitzt.

Die Filtration kann gemäß dem erfinderischen Verfahren in Druck- oder Vakuumfiltern, insbesondere in kontinuierlich zu betreibenden Trommel- oder Bandfiltern mit fortlaufender Nachreinigung des Filtergewebes durchgeführt werden.

Es war überraschend, daß durch die erfindungsgemäßen Maßnahmen ein Filterkuchen erhalten wird, der einerseits besonders gut filtrierbar ist, andererseits während der Filtration bereits soweit entwässert wird, daß er in stichfester und transportfähiger Form anfällt. Die gute Filtrationsleistung wird dadurch erzielt, daß die Reaktionsmaische aus Raffinat und Fällungsmittel bereits bei einem pH-Wert der Maische in der Nähe des Neutralpunktes filtriert wird. Bei höheren pH-Werten, d. h. bei längeren Verweilzeiten der Reaktionsmaische verschlechtert sich dagegen die Filtrationsleistung. Das anfallende Filtrat wird verworfen oder bei Verarbeitung relativ wasserarmer Raffinate zur Verdünnung der Reaktonsmaische teilweise oder insgesamt rezirkuliert. Ein weiterer Vorteil des erfindungsgemäßen Verfahrens besteht darin, daß bei der Verarbeitung saurer Raffinate zu stark alkalisch reagierenden Feststoffen sämtliche darin enthaltenen umweltrelevanten Schadstoffe, wie beispielsweise Cadmium, Chrom, Zink oder $P_2O_5$, in derart schwerlösliche Verbindungen überführt werden, daß bei ihrer Ablagerung auf einer Deponie keine unzulässig hohen Schadstoffkonzentrationen in ablaufenden Sickerwässern auftreten.

In den folgenden Beispielen soll das Verfahren näher erläutert werden.

### Beispiel 1

In einem Rührgefäß werden kontinuierlich 150 l/h eines bei der Extraktionsreinigung einer marokkanischen Naßphosphorsäure mit Amylalkohol anfallenden Raffinates (58% $H_2O$, 22,3% $SO_4$, 8,6% $P_2O_5$, 0,9% Fe, 0,29% Cr, 0,21% Zn, 0,013% Cd) mit ~400 l/h rezirkulierten Filtrates verdünnt und mit 80 kg/h festem Kalkhydrat versetzt. Die heiße Reaktionsmaische von 80°C fließt in einen Filteraufgabebehälter und wird bei einem pH-Wert von etwa 6 über ein Vakuumtrommelfilter (0,5 m²) mit ablaufendem Tuch filtriert. Bei einer Filtrationsleistung von 810 l/h m² fallen stündlich 230 kg Kuchen von trockener, brüchiger Konsistenz an. Eine wäßrige Aufschlämmung des Kuchens mit 10 Gew.-% Feststoff hat einen pH-Wert von etwa 11. Bei Eluierungsversuchen des festen Rückstandes (100 g Feststoff/1000 g $H_2O$) werden im Eluat folgende Bestandteile gefunden:

| | |
|---|---|
| $P_2O_5$ | < 10 ppm |
| Cd | < 0,005 ppm |
| Zn | < 0,01 ppm |
| Cr | 0,01 ppm |

### Beispiel 2 (Vergleichsbeispiel)

In Abänderung von Beispiel 1 wird unter sonst gleichen Bedingungen die Reaktionsmaische erst nach Erreichen eines pH-Wertes von 10 filtriert. Die Filtrationsleistung sinkt auf 680 l/h m² ab.

### Beispiel 3 (Vergleichsbeispiel)

In Abänderung von Beispiel 1 wird unter sonst gleichen Bedingungen der Hydratkalk in Wasser (160 l/h) angemaischt und anschließend mit dem Raffinat und rezirkuliertem Filtrat (240 l/h) umgesetzt. Bei einer Filtrationsleistung von 600 l/h m² wird ein nasser, zerfließender Kuchen erhalten.

### Beispiel 4 (Vergleichsbeispiel)

In Abänderung von Beispiel 1 werden zur gleichen Raffinat- und rezirkulierten Filtratmenge lediglich 65 kg/h festes Kalkhydrat zugesetzt. Nach Filtration wird der neutral reagierende Rückstand wie in Beispiel 1 mit Wasser eluiert. In diesem Fall werden im Eluat folgende Bestandteile analysiert:

| | |
|---|---|
| $P_2O_5$ | 150 ppm |
| Cd | 0,02 ppm |
| Zn | 0,04 ppm |
| Cr | 0,31 ppm |

### Patentansprüche

1. Verfahren zur Überführung von Raffinate genannten, sauren Salzrückständen, die bei der Reinigung von Phosphorsäure durch Lösungsmittelextraktion anfallen, in ein festes Deponieprodukt, indem man die wasserhaltigen Raffinate mit Kalkhydrat oder gebranntem Kalk in fester Form umsetzt, dadurch gekennzeichnet, daß man

a) in den Raffinaten einen solchen Wassergehalt einstellt, daß nach der Umsetzung mit dem Kalkhydrat oder gebranntem Kalk eine wäßrige, filtrierfähige Suspension erhalten wird;

b) den Raffinaten so viel des Kalkhydrates oder gebrannten Kalkes zusetzt, daß der nach der Umsetzung und Filtration der dabei gebildeten Reaktionsmaische anfallende Filterkuchen in wäßriger 10gew.-%iger Aufschlämmung einen pH-Wert von 9 bis 14 aufweist;

c) die Reaktionsmaische bereits vor der Beendigung der Umsetzung filtriert, wenn ihr pH-Wert einen Wert von 5 bis 8 erreicht hat, und daß man

d) den bei dieser Filtration erhaltenen Filterkuchen ausreagieren läßt und der Deponie zuführt.

2. Verfahren nach Anspruch 1, dadurch gekennzeichnet, daß man den Raffinaten so viel des Kalkhydrates oder gebrannten Kalkes zusetzt, daß die wäßrige Aufschlämmung des Filterkuchens einen pH-Wert von 9 bis 10 aufweist.

3. Verfahren nach Anspruch 1 oder 2, dadurch gekennzeichnet, daß man die Reaktionsmaische filtriert, wenn ihr pH-Wert einen Wert von 6 bis 7 erreicht hat.

4. Verfahren nach einem der Ansprüche 1 bis 3, dadurch gekennzeichnet, daß man in den Raffinaten einen solchen Wassergehalt einstellt, daß sich ein Feststoffgehalt von 20 bis 40 Gew.-% ergibt.

5. Verfahren nach einem der Ansprüche 1 bis 4, dadurch gekennzeichnet, daß man zur Einstellung des Wassergehaltes der Raffinate das bei der Filtration der Reaktionsmaische anfallende Filtrat ganz oder teilweise rezirkuliert.

## Claims

1. A process for converting acid salt residues, termed raffinates, which are obtained in the decontamination of phosphoric acid by extraction with a solvent, to solid waste products, wherein the water-containing raffinates are reacted with hydrate of lime or quicklime which comprises:
a) establishing in the raffinates a content of water necessary for them to ensure, after reaction with the hydrate of lime or quicklime, the formation of an aqueous filterable suspension;
b) admixing the raffinates with a quantity of hydrate of lime or quicklime necessary to ensure, after reaction and filtration of the reaction suspension, the formation of a filter cake having a pH-value within the range 9 to 14 in an aqueous 10 weight % suspension;
c) filtering the reaction suspension, prior to terminating the reaction, as soon as its pH-value has reached a value of 5 to 8; and
d) allowing the resulting filter cake to react completely and depositing it.

2. Process as claimed in claim 1, wherein the raffinates are admixed with a quantity of hydrate of lime or qucklime necessary to ensure the formation of a filter cake having a pH value of 9 to 10 in an aqueous suspension.

3. Process as claimed in claim 1 or 2, wherein the reaction suspension is filtered as soon as its pH value has reached a value of 6 to 7.

4. Process as claimed in any of claims 1 to 3, wherein the raffinates are admixed with a quantity of water necessary to provide for a solid matter content of 20 to 40 weight % therein.

5. The process as claimed in any of claims 1 to 4, wherein filtrate obtained on subjecting the reaction suspension to filtration is partially or completely recycled and used for establishing the water content in the raffinates.

## Revendications

1. Procédé pour la transformation de résidus acides de sels, dénommés produits raffinés, qui se forment dans la purification de l'acide phosphorique par extraction auxsolvants, en un déchet solide, dans lequel on fait réagir les produits raffinés contenant de l'eau avec l'hydrate de chaux ou la chaux calcinée sous forme solide, caractérisé en ce que
a) on ajuste dans les produits raffinés une teneur en eau telle que l'on obtienne après la réaction avec l'hydrate de chaux ou la chaux calcinée une suspension aqueuse filtrable
b) on ajoute aux produits raffinés une quantité telle d'hydrate de chaux solide ou de chaux calcinée que le tourteau de filtration se formant après la réaction et la filtration de la bouillie de réaction produite présente en suspension aqueuse à 10% en poids un pH de 9 à 14
c) on filtre la bouillie de réaction déjà avant la fin de la réaction si son pH a atteint une valeur de 5 à 8 et
d) on laisse réagir ultérieurement le tourteau de filtration obtenu dans cette filtration et on l'envoie à la décharge.

2. Procédé selon la revendication 1, caractérisé en ce qu'on ajoute aux produits raffinés une quantité telle d'hydrate de chaux ou de chaux calcinée que la suspension aqueuse du tourteau de filtration présente un pH de 9 à 10.

3. Procédé selon la revendication 1 ou 2, caractérisé en ce que l'on filtre la bouillie de réaction si son pH a atteint une valeur de 6 à 7.

4. Procédé selon l'une des revendications 1 à 3, caractérisé en ce que l'on ajuste dans les produits raffinés une teneur en eau telle que l'on ait une teneur en solides de 20 à 40% en poids.

5. Procédé selon l'une des revendications 1 à 4, caractérisé en ce que, pour le réglage de la teneur en eau des produits raffinés, on recycle totalement ou en partie le filtrat se formant dans la filtration de la bouillie de réaction.